# FASCICULE DE BREVET EUROPEEN

(11) **EP 3 541 626 B1**
(45) Date de publication et mention de la délivrance du brevet: **07.07.2021**
(21) Numéro de dépôt: 17811201.7
(22) Date de dépôt: 14.11.2017
(51) Int. Cl.: B32B 38/10, B29C 73/10, G01N 21/00, B23Q 17/24, G01M 5/00, G01B 11/24

(54) **PROCÉDÉ ET SYSTÈME DE CONTRÔLE D'USINAGE PLI À PLI DE MATÉRIAU MULTICOUCHE**
VERFAHREN UND SYSTEM ZUR INSPEKTION DER SCHICHTWEISEN BEARBEITUNG VON MEHRSCHICHTIGEN MATERIALIEN
METHOD AND SYSTEM FOR INSPECTING PLY-BY-PLY MACHINING OF MULTILAYER MATERIALS

(30) Priorité: 15.11.2016 FR 1661031
(43) Date de publication de la demande: 25.09.2019
(73) Titulaire: BAYAB INDUSTRIES, 31850 Montrabe (FR)
(72) Inventeur: CENAC, François, 31570 Lanta (FR)
(74) Mandataire: Junca, Eric
(86) Numéro de dépôt international: PCT/EP2017/079177
(87) Numéro de publication internationale: WO 2018/091454

(56) Documents cités:
- WO-A1-2013/156124
- US-A1- 2013 294 644

## Description

### DOMAINE TECHNIQUE

L'invention se rapporte à un procédé de contrôle d'usinage pli à pli de matériau multicouche, en particulier de matériau composite. L'invention s'inscrit dans le cadre d'une mise en œuvre de toute technologie d'usinage appropriée pour retirer des volumes de matière déterminés, en particulier par jet d'eau abrasif à haute pression. L'invention se rapporte également à un système automatisé de contrôle d'usinage pli à pli apte à mettre en œuvre un tel procédé.

L'invention s'applique aux structures mécaniques de grande dimension dans les domaines de l'éolien, de l'aéronautique ou de la construction navale et, en particulier mais non exclusivement, aux panneaux de caisson, de cadres ou de parois. De nos jours, ces structures sont de plus en plus constituées de matériaux à fibres longues, en général en matériaux composites car ces matériaux permettent d'atteindre un ratio tenue mécanique / poids d'un niveau sensiblement supérieur aux ratios obtenus avec les matériaux classiques à base d'alliage métallique.

Les matériaux composites sont, de manière générale, constitués d'un empilement de couches ou plis de fibres - fibres de carbone, de verre, de kevlar ou équivalent - orientées selon des directions différentes d'un pli au pli suivant. Les plis sont imprégnés d'une résine afin de former un ensemble présentant une grande solidité dans le sens des fibres.

De plus, l'orientation variable des couches successives des plis et la faible épaisseur de ces plis permettent une adaptabilité et donc une optimisation des structures en fonction des contraintes locales. Les matériaux composites permettent ainsi de réaliser de grandes structures en un seul tenant.

### ÉTAT DE LA TECHNIQUE

Cependant, le coût élevé de fabrication des matériaux composites impose de les réparer en cas d'impact ou de défaut.

En aéronautique plus particulièrement, deux méthodes principales se sont développées pour la réparation des structures composites : la réparation boulonnée et la réparation collée. La réparation boulonnée, déjà utilisée pour les structures métalliques, est moins adaptée aux spécificités des matériaux composites. En effet, cette technique présente l'inconvénient majeur de nécessiter un grand nombre de perçages pour le rivetage, et ces perçages sont incompatibles avec les caractéristiques mécaniques des matériaux composites à fibres longues.

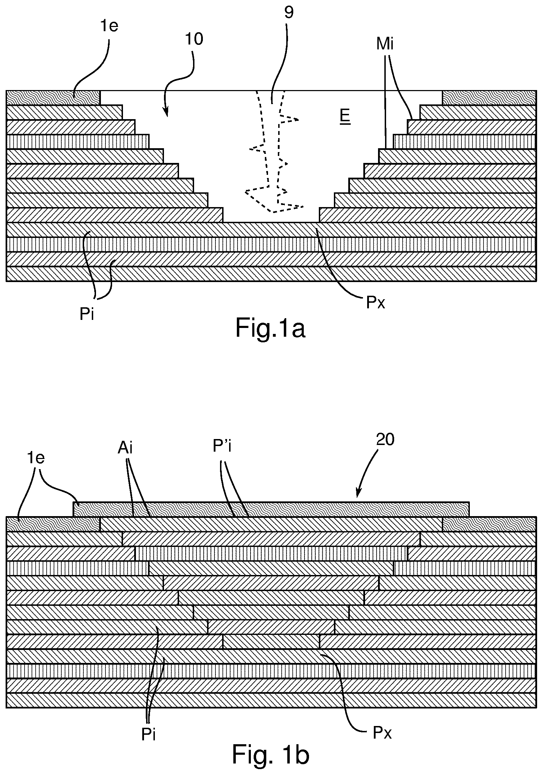

La réparation par collage constitue une technique plus évoluée et bien adaptée aux matériaux composites. Cette réparation a fait l'objet de développements, illustrés par exemple par les documents de brevet EP 2 442 941, US 2015185128, US 2013164481, US 2013294644 ou US20150203217. Comme illustré par la vue en coupe d'un panneau en matériau composite 10 de la figure 1a, cette réparation consiste en général à enlever la matière endommagée 9 (en traits pointillés sur la figure 1a) et à usiner un évidement « E » en marches d'escalier Mi, de pli à pli « Pi » successifs (ou en pente continue), les plis présentant trois orientations dans l'exemple (matérialisées par des hachures de directions différentes). L'évidement « E », réalisé à l'aide d'un système d'apport d'énergie - par exemple de jet d'eau abrasif -, s'élargit à partir d'un pli de fond Px non usiné jusqu'au revêtement de surface 1e du panneau 10.

Un patch 20 de rebouchage, de même forme que celle de l'évidement « E », est alors préparé et collé par de la résine époxy ou par co-cuisson sur les marches Mi (ou les pentes des plis) du panneau 10 (cf. figure 1b). Ce patch 20 présente avantageusement des plis P'i orientés successivement comme ceux du panneau 1 à réparer avec, une fois les avancées Ai du patch collé sur les marches Mi, un décalage d'orientation des plis tel que chaque pli P'i du patch 20 prend appui sur le pli Pi du panneau 10 présentant la même orientation.

Un tel assemblage est conforme au principe mécanique de base de la réparation collée: sur chaque marche de la structure, les efforts de traction du pli d'en dessous Pi sont transférés au pli P'i de même orientation qu'il supporte par cisaillement au niveau du collage. La largeur de chaque marche Mi est ainsi déterminée pour supporter en cisaillement les contraintes que chaque pli Pi de la structure supporte en traction.

Dans le document US2013294644, les limites des plis endommagés sont tracées par un marqueur et une carte des limites de plis, réalisée à partir d'une image et un traitement informatique, permet alors de fabriquer des plis de remplissage correspondants à ces limites. Cependant, l'usinage de réparation doit pouvoir faire apparaitre chaque pli concerné au cours de l'opération de sorte que le transfert des contraintes par cisaillement puisse s'effectuer correctement, sans attaquer ni abimer ces plis afin de ne pas réduire leur capacité mécanique en traction. Par ailleurs, selon le document WO2013156124, la vitesse d'usinage de l'évidement est indexée à une convergence des niveaux de luminosité, cette convergence correspondant à un modèle d'état des plis de même typologie.

Les besoins en précision dans l'usinage et le collage génèrent une grande variabilité dans leur exécution, variabilité qui résulte des singularités des matériaux telles que les relaxations, les reprises de plis (décalage,...), l'épaisseur variable des plis (défauts internes), ou la présence de différents matériaux. Or, aucun moyen de contrôle non-destructif et fiable n'a été jusqu'à présent développé pour valider la bonne exécution des phases d'usinage et de collage si bien que la réparation collée de pièces de structure n'est pas certifiée en aéronautique.

Il est ainsi apparu utile de réduire les variabilités des différentes phases de la réparation collée par une automatisation de l'usinage - par jet d'eau abrasif, laser, outillage coupant ou ultrasons - et de définir des indicateurs qualitatifs permettant de valider certaines phases.

Cependant, les variabilités géométriques des pièces à réparer résultant des singularités visés ci-dessus empêchent de définir des critères de qualité géométriques et seuls des critères visuels, non automatisés, sont ainsi utilisés: chaque marche est observée et le pourcentage de la marche en surface présentant la bonne orientation de fibres est indiqué. Cette démarche est longue, fastidieuse, peu reproductible et l'archivage des résultats est incertain.

De tels procédés de contrôle visuels et manuels restent aléatoires et la variabilité de mesure demeure en définitive inférieure à celle du phénomène à contrôler.

### EXPOSÉ DE L'INVENTION

L'invention vise à réaliser une caractérisation de la qualité d'usinage pli à pli de matériaux multicouches présentant une rapidité, une reproductibilité, ainsi qu'une fiabilité d'archivage bien supérieure à celles des procédés manuels de contrôle visuels. Pour ce faire, l'invention prévoit une caractérisation optique par une analyse d'image pour contrôler l'état de surface d'une pièce après un usinage de réparation.

A ce titre, la présente invention a pour objet un procédé de contrôle d'usinage pli à pli d'une pièce en matériau composite multicouche de type fibres - résine en réparation par l'usinage d'un évidement en marches d'escalier pli à pli ou en pente continue d'un empilement de plis de différentes orientations successives, comportant les étapes suivantes:
- prise d'images selon des éclairages d'orientation différente d'une surface de la pièce usinée à contrôler en fonction des orientations et des caractéristiques optiques des plis usinés;
- analyse par comparaison des images pixel par pixel afin de déterminer l'orientation de chaque pixel comme correspondant à celle de l'image dans laquelle ce pixel a une brillance supérieure;
- si le pixel présente une brillance similaire sur toutes les images, ce pixel est attribué à de la résine;
- construction d'une cartographie en unité pli de la surface à contrôler par l'application de l'analyse précédente à l'ensemble des pixels ;
- estimation d'un niveau de qualité d'usinage à partir de la cartographie réalisée, et
- archivage de chaque cartographie ainsi réalisée en tant que résultat d'usinage.

Selon des mises en œuvre avantageuses :
- une étape supplémentaire, avant archivage, de détermination par zone, en particulier par marche, de la répartition surfacique des phases d'orientations de pli et de résine afin de valider en unité pli une tolérance d'usinage prédéterminée;
- l'étape supplémentaire est suivie d'une étape complémentaire de détermination de la profondeur usinée en unité pli à partir de ladite répartition surfacique ;
- la détermination de la profondeur usinée en unité pli est établie pour chaque phase par un report graphique de sa répartition surfacique en fonction de différentes profondeurs en unité pli.

L'invention se rapporte également à un système automatisé de contrôle d'usinage de réparation pli à pli d'une surface d'une pièce en matériau multicouche, apte à mettre en œuvre un tel procédé. Ce système comporte une unité de traitement numérique de données en liaison avec une commande de sources lumineuses et une commande d'au moins une caméra de prises de vue. Les sources sont réparties sur des rampes de lumière linéaires montées sur des murs de lumière adjacents orientés successivement pour former un polyèdre régulier coïncidant avec des orientations de pli et fermé autour d'un axe central, la caméra étant agencée sur son axe central.

La caméra enregistre des signaux de brillance d'images correspondant à l'éclairage des couples de rampes de sources lumineuses d'orientation opposée sur la pièce à contrôler et activées successivement par la commande. Un convertisseur des signaux d'images est destiné à transmettre des données numériques de brillance d'images correspondant aux différentes orientations de pli à l'unité de traitement numérique pour fournir des informations de brillance exploitées par le procédé défini ci-dessus.

Selon des modes de réalisation préférés :
- la caméra et les sources lumineuses sont fixées sur une table de déplacement en XY asservie par l'unité de traitement pour positionner la caméra et les rampes de lumière afin de réaliser un assemblage d'images élémentaires enregistrées par la caméra lors de l'éclairage des couples de rampes de lumière d'orientation opposée activées successivement par la commande;
- l'unité de traitement numérique comporte un module de mémoire pour archiver les données de brillance, d'orientation des pixels, de cartographie et d'estimation de niveau de qualité d'usinage issues du traitement des données des signaux d'images selon le procédé de l'invention;
- le module de mémoire de l'unité de traitement numérique comporte également des données de tolérance d'usinage prédéterminées en fonction du matériau et des caractéristiques mécaniques de la pièce;
- la bande spectrale des sources lumineuses, les orientations des murs et donc des éclairages des rampes de sources lumineuses ainsi que les caractéristiques optiques de la caméra, en particulier de filtrage par un filtre polarisé, sont adaptées au matériau multicouche usiné;
- le polyèdre des murs de lumière est un octogone et les sources lumineuses sont des diodes électroluminescentes alignées le long de chaque face de cet octogone.

### PRÉSENTATION DES FIGURES

D'autres données, caractéristiques et avantages de la présente invention apparaîtront à la lecture de la description non limitée qui suit, en référence aux figures annexées qui représentent, respectivement :
- les figures 1a et 1b, des vues en coupe d'un panneau multicouche tel qu'usiné pour une réparation locale (figure 1a) et tel que rebouché par un patch (figure 1b) selon la technique connue de réparation collée (déjà commentées);
- la figure 2, une vue supérieure d'un exemple de système de contrôle selon l'invention avec des murs de lumière formant un octogone autour de la caméra de prise de vues;
- la figure 3, un ensemble de quatre vues d'image (I_{A} à I_{D}) prises par la caméra de la figure 2 pour respectivement quatre orientations d'éclairage obtenues successivement par les murs de lumière de la figure 2;
- la figure 4, une cartographie de la surface usinée obtenue par sélection de l'orientation de chaque pixel à partir d'une comparaison des valeurs de brillance de ce pixel dans les images de la figure 3, et
- la figure 5, un graphique d'évolution du pourcentage surfacique contrôlé de différentes phases d'orientation de pli et de résine pour différentes profondeurs en unité pli.

### DESCRIPTION DÉTAILLÉE

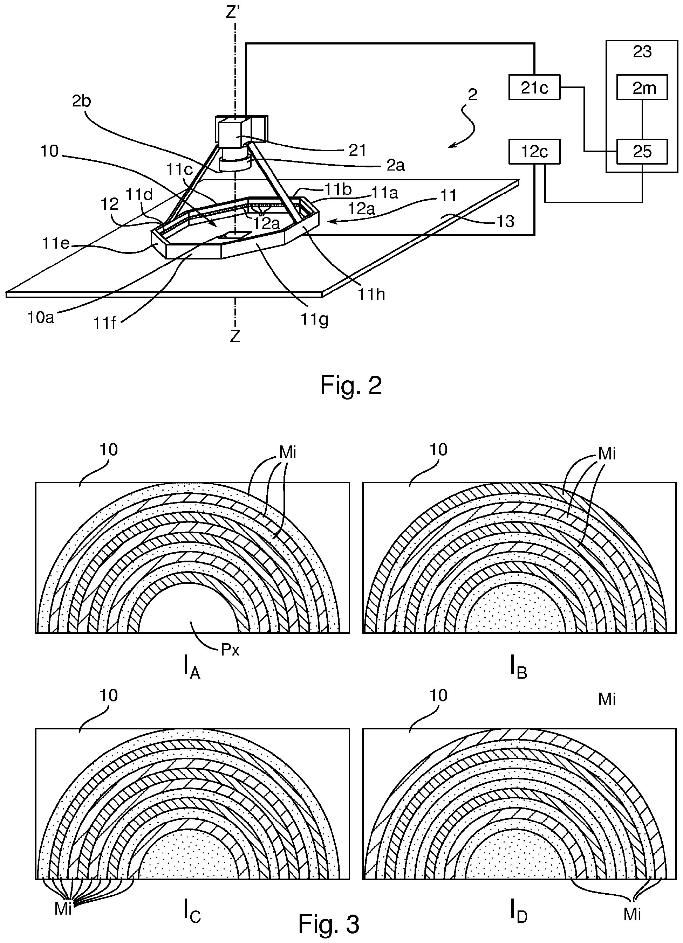

En référence à la vue supérieure de la figure 2, un système automatisé de contrôle d'usinage de réparation 2 selon l'invention comporte huit murs de lumière 11a à 11h formant un octogone régulier 11 d'axe central Z'Z. Chaque couple de murs adjacents, par exemple 11a et 11b, forment un écart angulaire de 45° et deux murs symétriquement opposés par rapport à l'axe Z'Z, par exemple 11a et 11e, sont parallèles.

Chaque mur 11a à 11h intègre une rampe linéaire de sources lumineuses 12, six diodes électroluminescentes « LED » 12a dans l'exemple illustré. L'éclairage de chaque rampe de lumière 12 a pour angle celui du mur 11a à 11h sur lequel la rampe de lumière est fixée et les paires de rampe de deux murs opposés, et donc d'orientation opposée, sont connectées électriquement ensemble.

En prenant pour référence un plan II-II perpendiculaire à deux murs opposés, 11a et 11e dans l'exemple, les éclairages des rampes 12 fixés sur deux murs opposés - 11a et 11e, 11b et 11f, 11c et 11g ainsi que 11d et 11h - sont orientés avec des écarts d'angle respectivement égaux à 0°, 45°, 90° et 135° sur le panneau de matériau composite 10 à contrôler, tel que disposé parallèlement au plan des rampes de lumière 12. Les rampes de lumière 12 sont avantageusement fixées sur une table de déplacement en XY 13.

Le système automatisé 2 comporte également une caméra de prise de vues numérique 21, fixée également sur la table de déplacement en XY 13, munie d'un objectif 2a adapté à la bande spectrale des LED 12a. L'objectif 2a, aligné sur l'axe central Z'Z, est avantageusement muni d'un filtre polarisant 2b afin de générer des images sans reflet de la surface 10a du panneau usiné 10 pour une réparation collée. Plus généralement, il est avantageux d'adapter l'objectif, l'ajout de filtres, le type de cellules photosensibles de la caméra en fonction des matériaux contrôlés.

De plus, il est avantageusement tenu compte des orientations principales des couches du matériau multicouche à contrôler pour définir les caractéristiques optiques de la caméra et le nombre de rampes de lumière pour utiliser des écarts d'angle pertinents entre ces rampes afin de couvrir toute la zone de réparation.

En outre, le système automatisé 2 comporte une unité de traitement numérique de données 23 intégrant un module mémoire 2m en liaison avec une commande 12c des rampes de lumière 12 et une commande 21c de la caméra de prises de vue 21. Un convertisseur de signaux 25 intégré également à l'unité de traitement 23 traduit les signaux d'image en données numériques exploitables par l'unité de traitement 23.

En fonctionnement, l'éclairage des rampes opposées 12 est activée successivement par la commande 12c et la camera 21 enregistre une image par orientation des rampes de lumière 12 l'unité de traitement numérique 23 gérant l'ensemble des commandes.

En référence aux quatre vues d'image I_{A} à I_{D} de la figure 3 ainsi obtenues, la zone couverte par la caméra 21 et les rampes de lumière 12 sont avantageusement positionnées en XY par la table 13 (cf. figure 2) pour permettre un contrôle complet ou au moins représentatif de tout l'usinage. Les quatre images obtenues I_{A} à I_{D} pour les quatre orientations de lumière 0°, 45°, 90° et 135°, coïncidant avec les orientations des plis, s'étendent sur une zone large de 300 x 130 mm². Plus précisément, la table de déplacement en XY 13 est asservie par l'unité de traitement numérique 23 pour permettre un assemblage des images élémentaires qui s'étendent individuellement sur environ 15 x 15 mm². Le convertisseur 25 des signaux d'images enregistrés par la caméra 21 transmet des données numériques à l'unité de traitement numérique 23 pour fournir les informations d'image exploitées ci-dessous (cf. figure 2).

Les images I_{A} à I_{D} présentent différentes marches demi-circulaires Mi autour du pli de fond Px, les marches Mi étant obtenues après un usinage pli à pli pour effectuer ultérieurement la réparation du panneau de matériau composite usinée 10 par un patch de configuration complémentaire (cf. figures 1a et 1b). Selon l'orientation des rampes de lumière, la brillance des marches Mi est différenciée. Ces différences de brillance sont exploitées avec l'élaboration ci-dessous d'une cartographie de surface pour estimer le niveau de qualité de l'usinage.

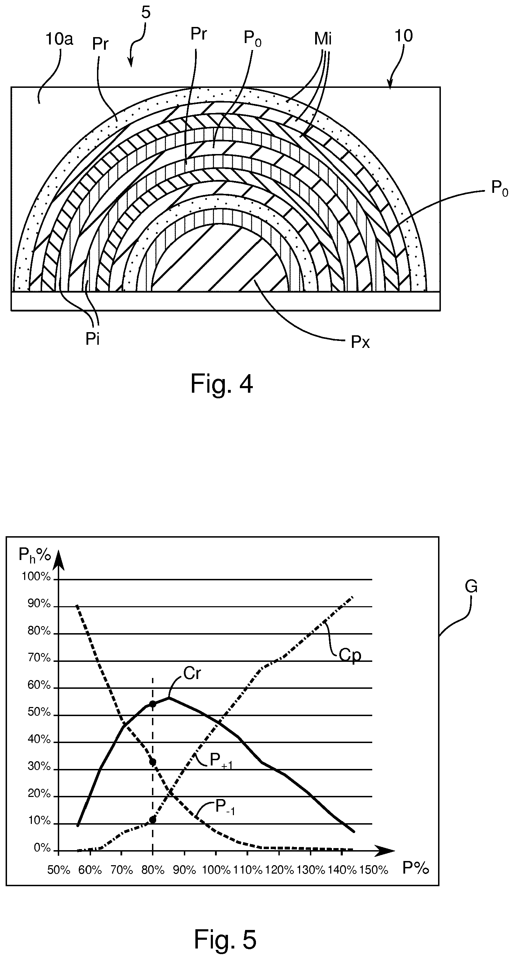

Une telle cartographie de surface 5 du panneau usinée à contrôler 10 est illustrée par la figure 4. Cette cartographie 5 est réalisée en analysant, les quatre images I_{A} à I_{D} de la figure 3. L'analyse consiste à comparer pixel à pixel les quatre images I_{A} à I_{D} de la surface usinée 10a calibrée en unité pli de la manière suivante. Plus précisément, lorsque la brillance d'un pixel P₀ d'une image, par exemple I_{A}, est supérieure que celle du même pixel dans les autres images I_{B} à I_{D}, le pixel P₀ est considéré avoir l'orientation de l'image I_{A}. Lorsqu'un pixel Pr a des niveaux de brillance similaires dans les quatre images I_{A} à I_{D}, ce pixel Pr est considéré être de la résine.

Cette cartographie de surface 5 permet alors d'estimer directement, de façon automatisée, rapide et reproductible par l'unité de traitement 23, la qualité d'usinage en fonction de l'homogénéité des attributions de pixels sur les différentes images I_{A} à I_{D} correspondant aux différentes orientations de pli. Cette estimation directe est archivée numériquement dans le module mémoire 2m de l'unité de traitement 23.

Avantageusement, les pourcentages surfaciques des cinq phases - les quatre orientations de pli et la résine - la cartographie de surface 5 peut également être exploitée par l'unité de traitement 23 par zone, dans l'exemple par marche Mi, et définir un pourcentage de chaque orientation de pli pour une orientation de référence, une orientation à 45° dans l'exemple : 85% de plis à 45°, 8% de résine et 7% de plis à 90°. Ces pourcentages servent alors à valider la tolérance d'usinage en unité pli pour ce panneau 10, telle que référencée dans le module mémoire 2m de l'unité de traitement 23 (cf. figure 2). La cartographie est également archivée dans ce module 2m.

Les pourcentages surfaciques des cinq phases de la cartographie 5 permettent egalement de définir des profondeurs usinées en unité pli, comme le montre le graphique « G » de la figure 5.

Ce graphique « G » montre l'évolution de la courbe C_{P} de pourcentage surfacique de phase contrôlée Ph% sur deux plis consécutifs P+1 et P-1 pour différentes profondeurs en unité pli P% situées autour de l'interface inter-pli pris comme référence 100%. La courbe de pourcentage de phase « résine » Cr est également reportée.

Chaque profondeur en unité pli P%, par exemple 80% sur le graphe de la figure 5, correspond à des répartitions spécifiques sensiblement complémentaires du pourcentage surfacique contrôlée Ph% dans les plis P+1 et P-1, environ respectivement 10% et 35% dans l'exemple, avec environ 55% de résine. Le graphique « G » est également archivé dans le module mémoire 2m (cf. figure 2).

Le procédé selon l'invention peut être totalement, semi ou partiellement automatisé. D'autre part, le nombre de murs de lumière peut être de 6, 10 ou 12 ou plus, et le nombre de sources lumineuses par rampe peut également varier. En outre, deux caméras positionnées en vis-à-vis peuvent être utilisées. De plus, les murs de lumière peuvent ne pas être couplés par paires.

## Revendications

1. Procédé de contrôle d'usinage pli à pli d'une pièce en matériau composite multicouche (10) de type fibres - résine en réparation par l'usinage d'un évidement (E) en marches d'escalier (Mi) pli à pli ou en pente continue d'un empilement de plis (Pi) de différentes orientations successives, en liaison avec une imagerie **caractérisé en ce qu'**il comporte les étapes suivantes :
- prise d'images (I_{A} à I_{D}) selon des éclairages d'orientation différente (12) d'une surface (10a) de la pièce usinée à contrôler (10) en fonction des orientations et des caractéristiques optiques des plis usinés (Pi);
- analyse par comparaison des images (I_{A} à I_{D}) pixel par pixel (P₀) afin de déterminer l'orientation de chaque pixel (P₀) comme correspondant à celle de l'image dans laquelle ce pixel a une brillance supérieure;
- si le pixel présente une brillance similaire sur toutes les images (I_{A} à I_{D}), ce pixel (Pr) est attribué à de la résine;
- construction d'une cartographie (5) en unité pli de la surface à contrôler (10a) par l'application de l'analyse précédente à l'ensemble des pixels ;
- estimation d'un niveau de qualité d'usinage à partir de la cartographie réalisée (5), et
- archivage (2m) de chaque cartographie (5) ainsi réalisée en tant que résultat d'usinage.

2. Procédé de contrôle d'usinage pli à pli selon la revendication 1, dans lequel une étape supplémentaire, avant archivage, de détermination par zone, en particulier par marche (Mi), de la répartition surfacique des phases d'orientations de pli et de résine (Ph%) afin de valider en unité pli une tolérance d'usinage prédéterminée.

3. Procédé de contrôle d'usinage pli à pli selon la revendication précédente, dans lequel l'étape supplémentaire est suivie d'une étape complémentaire de détermination de la profondeur usinée en unité pli (P%) à partir de ladite répartition surfacique (Ph%).

4. Procédé de contrôle d'usinage pli à pli selon la revendication précédente, dans lequel la détermination de la profondeur usinée en unité pli (P%) est établie pour chaque phase par un report graphique (G) de sa répartition surfacique (Ph%) en fonction de différentes profondeurs en unité pli (P%).

5. Système automatisé de contrôle d'usinage de réparation pli à pli (2) d'une surface (10a) d'une pièce en matériau multicouche (10), comportant une unité de traitement numérique de données (23) en liaison avec une commande (12c) de sources lumineuses (12a) et une commande (21c) d'au moins une caméra de prises de vue (21), **caractérisé en ce que** les sources (12a) sont réparties sur des rampes de lumière linéaires (12) montées sur des murs de lumière adjacents (11a à 11h) orientés successivement pour former un polyèdre régulier (11) coïncidant avec des orientations de pli et fermé autour d'un axe central (Z'Z), la caméra (21) étant agencée sur cet axe central (Z'Z) et étant destinée à enregistrer des signaux de brillance d'images correspondant à l'éclairage des couples de rampes de sources lumineuses (12) d'orientation opposée sur la pièce à contrôler (10) et activées successivement par la commande (12c), et **en ce qu'**un convertisseur des signaux d'images (25) est destiné à transmettre des données numériques de brillance d'images (I_{A} à I_{D}) correspondant aux différentes orientations de pli à l'unité de traitement numérique (23) pour fournir des informations de brillance exploitées par le procédé de contrôle d'usinage selon l'une quelconque des revendications précédentes.

6. Système automatisé de contrôle d'usinage selon la revendication précédente, dans lequel la caméra (21) et les sources lumineuses (12a) sont fixées sur une table de déplacement en XY (13) asservie par l'unité de traitement (23) pour positionner la caméra (21) et les rampes de lumière (12) afin de réaliser un assemblage d'images élémentaires enregistrées par la caméra (21) lors de l'éclairage des couples de rampes de lumière (12) d'orientation opposées activées successivement par la commande (12c).

7. Système automatisé de contrôle d'usinage selon l'une des revendications 5 ou 6, dans lequel l'unité de traitement numérique (23) comporte un module de mémoire (2m) pour archiver les données de brillance, d'orientation des pixels (P0, Pr), de cartographie (5) et d'estimation de niveau de qualité d'usinage issues du traitement des données des signaux d'images.

8. Système automatisé de contrôle d'usinage selon l'une des revendications 5 à 7, dans lequel le module de mémoire (2m) de l'unité de traitement numérique (23) comporte également des données de tolérance d'usinage prédéterminées en fonction du matériau et des caractéristiques mécaniques de la pièce (10).

9. Système automatisé de contrôle d'usinage selon l'une des revendications 5 à 8, dans lequel la bande spectrale des sources lumineuses (12a), les orientations des murs (11a à 11h) et donc des éclairages des rampes de sources lumineuses (12) ainsi que les caractéristiques optiques de la caméra (21), en particulier de filtrage par un filtre polarisé (2b), sont adaptées au matériau multicouche usiné.

10. Système automatisé de contrôle d'usinage selon l'une des revendications 5 à 9, dans lequel le polyèdre (11) des murs de lumière (11a à 11h) est un octogone et les sources lumineuses (12a) sont des diodes électroluminescentes alignées le long de chaque face de cet octogone (11).

## Patentansprüche

1. Verfahren zur Kontrolle lagenweiser Bearbeitung eines Teils aus Mehrschicht-Verbundmaterial (10) vom Faser-Harz-Typ bei Reparatur durch die Bearbeitung einer Ausnehmung (E) aus lagenweisen Treppenstufen (Mi) oder einer durchgehenden Schräge eines Stapels von Lagen (Pi) verschiedener aufeinanderfolgender Orientierungen in Verbindung mit einer Bildgebung, **dadurch gekennzeichnet, dass** es Folgendes aufweist:
- Aufnehmen von Bildern (I_{A} bis I_{D}) bei Beleuchtungen unterschiedlicher Orientierung (12) einer Fläche (10a) des zu kontrollierenden bearbeiteten Teils (10) in Abhängigkeit von den Orientierungen und den optischen Merkmalen der bearbeiteten Lagen (Pi);
- Analyse durch Vergleichen der Bilder (I_{A} bis I_{D}) Pixel für Pixel (Po), um die Orientierung jedes Pixels (P₀) als jener des Bilds entsprechend zu bestimmen, in dem dieser Pixel eine höhere Helligkeit aufweist;
- wenn der Pixel eine ähnliche Helligkeit auf allen Bildern (I_{A} à I_{D}) aufweist, wird dieser Pixel (Pr) Harz zugeordnet;
- Aufbauen einer Kartierung (5) in Lageneinheit der zu kontrollierenden Fläche (10a) durch Anwendung der vorherigen Analyse auf die Menge der Pixel;
- Schätzen eines Bearbeitungsqualitätsniveaus anhand der erstellten Kartierung (5), und
- Archivieren (2m) jeder so erstellten Kartierung (5) als Bearbeitungsergebnis.

2. Verfahren zur Kontrolle lagenweiser Bearbeitung nach Anspruch 1, wobei vor dem Archivieren ein zusätzlicher Schritt des Bestimmens pro Bereich, insbesondere pro Stufe (Mi), der Flächenverteilung der Phasen von Orientierungen von Lagen und Harz (Ph%), um eine vorbestimmte Bearbeitungstoleranz in Lageneinheit zu validieren.

3. Verfahren zur Kontrolle lagenweiser Bearbeitung nach dem vorhergehenden Anspruch, wobei auf den zusätzlichen Schritt ein ergänzender Schritt des Bestimmens der bearbeiteten Tiefe in Lageneinheit (P%) anhand der Flächenverteilung (Ph%) folgt.

4. Verfahren zur Kontrolle lagenweiser Bearbeitung nach dem vorhergehenden Anspruch, wobei die Bestimmung der bearbeiteten Tiefe in Lageneinheit (P%) für jede Phase über eine graphische Verschiebung (G) ihrer Flächenverteilung (Ph%) in Abhängigkeit von verschiedenen Tiefen in Lageneinheit (P%) erstellt wird.

5. Automatisiertes System zur Kontrolle lagenweiser Reparaturbearbeitung (2) einer Fläche (10a) eines Teils aus Mehrschichtmaterial (10), aufweisend eine digitale Datenverarbeitungseinheit (23) in Verbindung mit einer Steuerung (12c) von Lichtquellen (12a) und einer Steuerung (21c) mindestens einer Bildaufnahmekamera (21), **dadurch gekennzeichnet, dass** die Quellen (12a) auf linearen Lichtreihen (12) verteilt sind, die auf benachbarten Lichtwänden (11a bis 11h) angebracht sind, die aufeinanderfolgend so orientiert sind, dass sie einen regelmäßigen Polyeder (11) bilden, der mit Lagenorientierungen zusammenfällt und um eine Mittelachse (Z'Z) geschlossen ist, wobei die Kamera (21) auf dieser Mittelachse (Z'Z) angeordnet ist und dazu bestimmt ist, Helligkeitssignale von Bildern zu registrieren, die der Beleuchtung der Paare von Lichtquellenreihen (12) entgegengesetzter Orientierung auf dem zu kontrollierenden Teil (10), und die nacheinander durch die Steuerung (12c) aktiviert werden, entsprechen, und dadurch, dass ein Wandler der Bildsignale (25) dazu bestimmt ist, digitale Helligkeitsdaten von Bildern (I_{A} à I_{D}) , die den verschiedenen Lagenorientierungen entsprechen, an die digitale Verarbeitungseinheit (23) zu übertragen, um Helligkeitsinformationen bereitzustellen, die durch das Verfahren zur Bearbeitungskontrolle nach einem der vorhergehenden Ansprüche genutzt werden.

6. Automatisiertes Bearbeitungskontrollsystem nach dem vorhergehenden Anspruch, wobei die Kamera (21) und die Lichtquellen (12a) auf einem XY-Bewegungstisch (13) befestigt sind, der von der Verarbeitungseinheit (23) geregelt wird, um die Kamera (21) und die Lichtreihen (12) zu positionieren, um eine Anordnung aus Elementarbildern zu erstellen, die von der Kamera (21) bei dem Beleuchten der Paare von Lichtreihen (12) entgegengesetzter Orientierung registriert werden, die nacheinander durch die Steuerung (12c) aktiviert werden.

7. Automatisiertes Bearbeitungskontrollsystem nach einem der Ansprüche 5 oder 6, wobei die digitale Verarbeitungseinheit (23) ein Speichermodul (2m) zur Archivierung der Daten der Helligkeit, Pixelorientierung (P0, Pr), Kartierung (5) und des Bearbeitungsqualitätsniveaus, die aus der Verarbeitung der Daten der Bildsignale hervorgehen, aufweist.

8. Automatisiertes Bearbeitungskontrollsystem nach einem der Ansprüche 5 bis 7, wobei das Speichermodul (2m) der digitalen Verarbeitungseinheit (23) ebenfalls vorbestimmte Bearbeitungstoleranzdaten in Abhängigkeit vom Material und den mechanischen Merkmalen des Teils (10) aufweist.

9. Automatisiertes Bearbeitungskontrollsystem nach einem der Ansprüche 5 bis 8, wobei das Spektralband der Lichtquellen (12a), die Orientierungen der Wände (11a bis 11h) und somit der Beleuchtungen der Reihen von Lichtquellen (12) sowie die optischen Merkmale der Kamera (21), insbesondere der Filterung durch einen Polarisationsfilter (2b), für das bearbeitete Mehrschichtmaterial geeignet sind.

10. Automatisiertes Bearbeitungskontrollsystem nach einem der Ansprüche 5 bis 9, wobei der Polyeder (11) der Lichtwände (11a bis 11h) ein Oktogon ist und die Lichtquellen (12a) Leuchtdioden sind, die entlang jeder Seite dieses Oktogons (11) ausgerichtet sind.

## Claims

1. Method for inspecting ply-by-ply machining of a part under repair made of a fibre-resin type multilayer composite material (10) by ply-by-ply machining a stepped (Mi) or continuously sloped cut-out (E) in a stack of plies (Pi) with different successive orientations, in conjunction with imaging, **characterized in that** it includes the following steps:
- capturing images (I_{A} to I_{D}) with lighting of different orientation (12) of a surface (10a) of the machined part (10) to be inspected as a function of the orientations and the optical characteristics of the machined plies (Pi);
- analysing by comparing the images (I_{A} to I_{D}) pixel by pixel (P₀) in order to determine the orientation of each pixel (P₀) as corresponding to that of the image in which that pixel has a greater brightness;
- if the pixel has similar brightness in all the images (I_{A} to I_{D}) that pixel (Pr) is attributed to the resin;
- constructing a map (5) expressed in ply units of the surface (10a) to be inspected by applying the foregoing analysis to all the pixels;
- estimating a level of machining quality from the map (5) produced; and
- archiving (2m) each map (5) produced in this way as a machining result.

2. Ply-by-ply machining inspection method according to Claim 1, in which an additional step, before archiving, of determining zone by zone, in particular step by step (Mi), the surface distribution of the ply and resin orientation phases (Ph%) in order to validate a predetermined machining tolerance expressed in ply units.

3. Ply-by-ply machining inspection method according to the preceding claim, in which the additional step is followed by a complementary step of determining the machined depth expressed in ply units (P%) from said surface distribution (Ph%).

4. Ply-by-ply machining inspection method according to the preceding claim, in which the machined depth expressed in ply units (P%) is determined for each phase by a graphical report (G) of its surface distribution (Ph%) as a function of different depths expressed in ply units (P%).

5. Automated system for ply-by-ply repair machining inspection (2) of a surface (10a) of a multilayer material part (10), including a digital data processing unit (23) connected to a controller (12c) of light sources (12a) and a controller (21c) of at least one imaging video camera (21), **characterized in that** the sources (12a) are distributed on linear lighting strips (12) mounted on adjacent light walls (11a to 11h) successively oriented to form a regular polyhedron (11) coinciding with ply orientations and closed around a central axis (Z'Z), the video camera (21) being disposed on that central axis (Z'Z) and being intended to record image brightness signals corresponding to the lighting of pairs of strips of light sources (12) of opposite orientation on the part (10) to be inspected and successively activated by the controller (12c), and **in that** a converter (25) of the image signals is adapted to transmit brightness digital data of images (I_{A} to I_{D}) corresponding to the different ply orientations to the digital processing unit (23) to supply brightness information exploited by the machining inspection method according to any one of the preceding claims.

6. Automated machining inspection system according to the preceding claim, in which the video camera (21) and the light sources (12a) are fixed to an XY mobile table (13) controlled by the processing unit (23) to position the video camera (21) and the lighting strips (12) in order to produce an assembly of elementary images recorded by the video camera (21) on lighting oppositely oriented pairs of lighting strips (12) activated successively by the controller (12c).

7. Automated machining inspection system according to either one of Claims 5 or 6, in which the digital processing unit (23) includes a memory module (2m) for archiving the brightness data, pixel orientation data (P0, Pr), map (5) data and the estimated level of machining quality obtained by processing image signal data.

8. Automated machining inspection system according to any one of claims 5 to 7, in which the memory module (2m) of the digital processing unit (23) also includes machining tolerance data predetermined as a function of the material and the mechanical characteristics of the part (10).

9. Automated machining inspection system according to any one of Claims 5 to 8, in which the spectral band of the light sources (12a), the orientations of the walls (11a to 11h) and therefore of the lighting by the strips of light sources (12) and the optical characteristics of the video camera (21), in particular characteristics of filtering by a polarized filter (2b), are adapted to the machined multilayer material.

10. Automated machining inspection system according to any one of Claims 5 to 9, in which the polyhedron (11) of the light walls (11a to 11h) is an octagon and the light sources (12a) are light-emitting diodes aligned along each face of that octagon (11).
